# EUROPEAN PATENT APPLICATION

(11) **EP 2 647 899 A1**
(43) Date of publication of application: **09.10.2013**
(21) Application number: 12460015.6
(22) Date of filing: 03.04.2012
(51) Int. Cl.: F16M 11/00, G03B 17/56

(54) **A camera slider/crane**

(71) Applicant: Dybowski, Janusz, 81-842 Sopot (PL)
(72) Inventor: Dybowski, Janusz, 81-842 Sopot (PL)
(74) Representative: Czub, Krzysztof

(57) **Abstract**

A camera slider/crane comprising a rail (1) for driving a camera dolly (2) coupled with a counterbalance (3); an arm (4) changing the camera slider/crane into a crane function; a mounting unit (5) positioning the rail (1) in a vertical position; a tripod head (6); and two feet (7) for leveling the rail (1) when said rail (1) is used in horizontal position and one of said feet (7) securing the rail (1) when said rail is used in vertical position. The tripod head (6) is rotatable and is connected detachably to a tripod (8) (not claimed). The rail (1) is connected detachably and pivotably to the tripod head (6). The arm (4) has a second arm member (9) connected fixedly and detachably to a tiltable part of the camera dolly (2) while a locking system (11) is disabled, and a first arm member (12) connected detachably and movably by the first end of the first arm member to the tripod head (6) while the tiltable part of the camera dolly (2) is unlocked and tiltable.

## Description

### BACKGROUND OF THE INVENTION

### Field of the Invention

The object of the invention is a system for moving and controling a film, video or photo camera during creating films or video.

### Brief Description of the Background of the Invention Including Prior Art.

Very often, when creating films and videos it is necessary to change the position of the camera. Horizontal movement of the camera is usually achieved by mounting the camera on a carriage, also called a "dolly", that rides on a linear track. Known track systems typically use tracks having a pair of parallel rails placed and eventually leveled on a ground or on a floor. Some systems use only straight tracks and other use curved tracks.

Another kind of movement of the camera can be achieved using a camera crane, as disclosed in U.S. Pat. No. 5,177,516 entitled *"Camera crane".* The camera crane has a boom supported rotatably by a support column whose height can be adjusted. Another kind of camera crane is the camera crane with pan/tilt head as disclosed in the U.S. Pat. No. 5,940,645 entitled *"Camera crane with pan*/*tilt head".* The pan and tilt head member is attached to the camera platform, that is adapted for panning and tilting the camera.

Described solutions do not solve the problem of inconvenient and time consuming shifting the camera between the devices designed to provide different camera movements when shooting film or video footage. Moreover, it is usually necessary to use an additional transportation means like a truck or a trailer to carry all the devices from one place to the other.

### SUMMARY OF THE INVENTION

It is an objective of the present invention to provide a simple and portable device combining the functions of camera dolly, camera crane and camera tower for resolving the problem of shifting the camera between many camera operating devices and handling all the devices from one place to the other for operating the camera during shooting.

This and other objects and advantages of the present invention will become apparent from the detailed description, which follows.

The present invention provides a portable camera slider/crane for moving the camera along a predefined path in three dimensional space, the camera slider/crane comprising:
a rail for driving a camera dolly along said rail, the rail having a center of gravity of the rail and a pivot placed in the center of gravity, said camera dolly coupled with a counterbalance drivable along the rail in the oposite direction to the camera dolly in relation to the center of gravity of the rail;
an arm or a parallelogram, or a parallel-guide member changing the camera slider/crane into a crane function;
a mounting unit positioning the rail in a vertical position;
a tripod head; and
two feet for leveling the rail in horizontal position and one of said feet for securing the rail when said rail is used in vertical position;
   wherein the tripod head is rotatable in the horizontal plane and is connected detachably to a tripod; and the rail is connected detachably and pivotably at the center of gravity of the rail by means of the pivot to the tripod head, and wherein the rail and the arm, in the crane function of the camera slider/crane, are movable during opreation of the camera substantially in the same vertical plane for providing the camera upwards or downwards movement during shooting by the camera.

Preferably, the arm comprises two elongated arm members, a first arm member substantially parallel to the rail and a second arm member substantially vertical. The first arm member has a first end of the first arm member and a second end of the first arm member. The first end of the first arm member is connected rotatably to the tripod head. The second arm member is having a first end of the second arm member and a second end of the second arm member. The first end of the second arm member is connected fixedly and detachably to the tiltable part of the camera dolly. The first arm member and the second arm member is connected rotatably together at their second ends respectively. The length of the first arm member is being adjustable, for the desired movement of the camera connected to the tiltable part of the camera dolly, while the locking system is disabled and the rail is rotated at the point of gravity for mooving the camera up or down.

Preferably, the rail has an upper tracks and a lower tracks.

It is advantageous, that the camera dolly comprises a base with an upper guiding wheels drivable along the upper tracks and lockable by a first locking means, wherein the upper guiding wheels remain adjucent to the upper tracks along the whole length of the rail, and are protected by the shape of the hollow body for falling out from the upper tracks.

Preferably, the tiltable part of the camera dolly, which is tiltable in the plain of the tiltable movement of the rail, and furthermore is lockable against the base by a second locking means.

It is also advantageous, that the counterbalance comprises a lower guiding wheels drivable along the lower tracks respectively in the opposite direction to the moving direction of the camera dolly, symmetrically to the center of gravity of the rail, wherein the lower guiding wheels remain adjucent to the lower tracks along the whole length of the rail, and are protected for falling out from the lower tracks. Preferably, the rail is lockable against the tripod head at required angle by a third locking means.

Preferably, the rail can be in a shape of an elongated hollow body.

The camera dolly and the counterbalance can be connected respectively by a flexible member placed within the elongated hollow body around a profile wheels, wherein each of the profile wheels is placed rotatably, at each end section of the elongated hollow body respectively, and the flexible member is in a form of a loop placed around the profile wheels and is smoothly movable along the elongated hollow body.

Preferably, the weight of the counterbalance is adjustable by detachable weight segments lockable to the counterbalance by a forth locking means respectively according the weight of the camera.

The profile wheels and the flexible member can be drivable by a crank handle or a motor (not claimed) controlled by Motion Control System (not claimed).

Preferably, the locking system secure the camera when the camera slider/crane works in a camera dolly or a camera tower functions of the camera slider/crane or when the second arm member is connected to the tiltable part of the camera dolly in the crane function of the camera slider/crane, and when the second locking means is unlocked from the base.

### BRIEF DESCRIPTION OF THE DRAWINGS

In the accompanying drawings one of the possible embodiments of the present invention is shown, where:

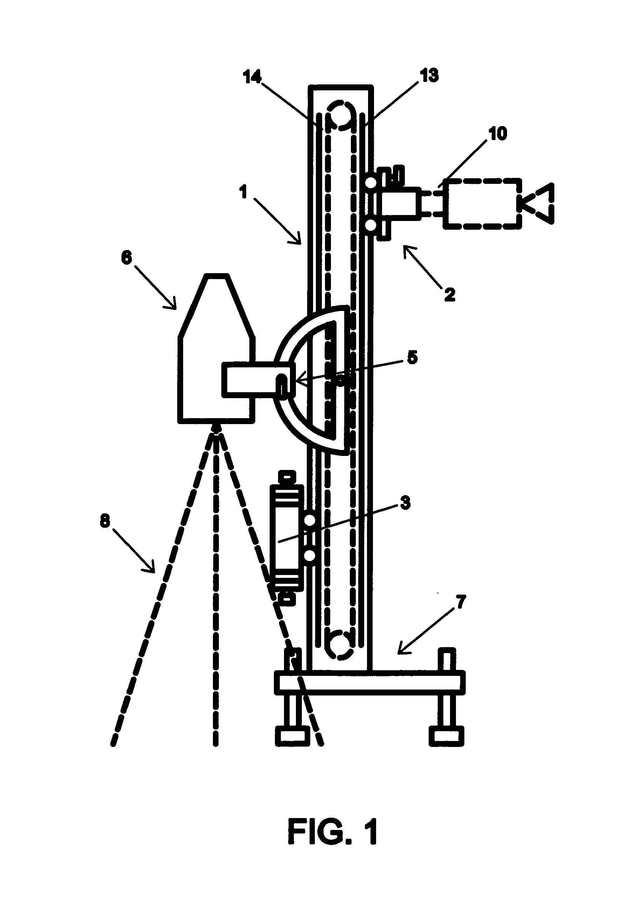

Fig. 1 presents a perspective view of the camera slider/crane in the function of tower, with the tripod and camera (not claimed);

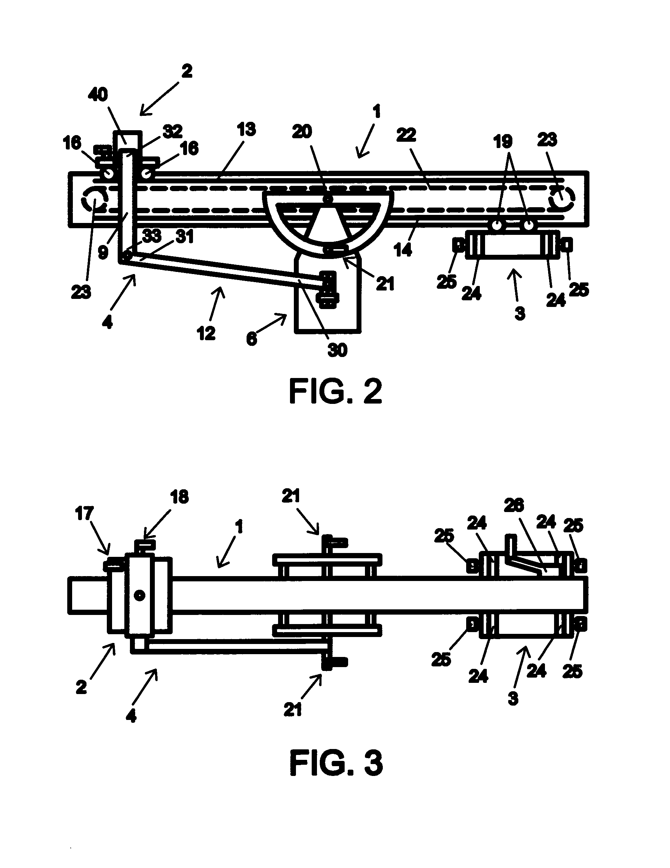

Fig. 2 presents a side view of the rail with the camera dolly and the counterbalance, said rail combined with the tripod head and the arm for the tilt function;
Fig. 3 presents a top view of the rail with the camera dolly and the counterbalance, said rail combined with the tripod head and the arm for the tilt function;

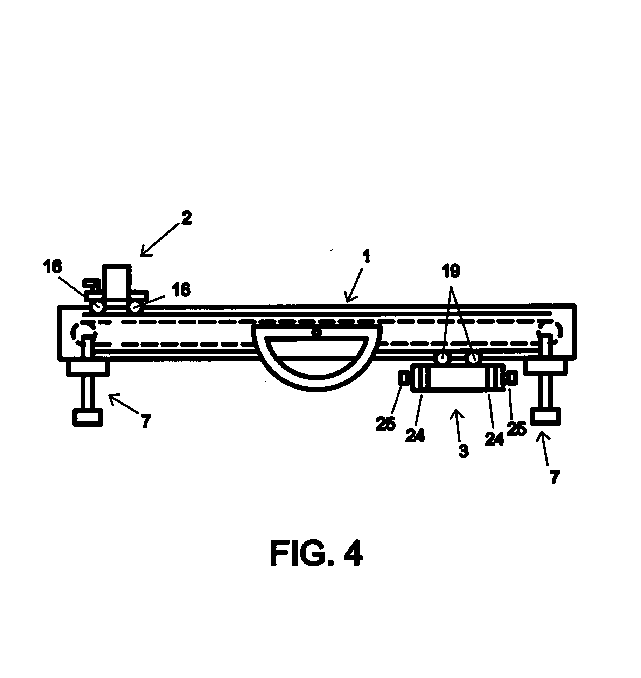

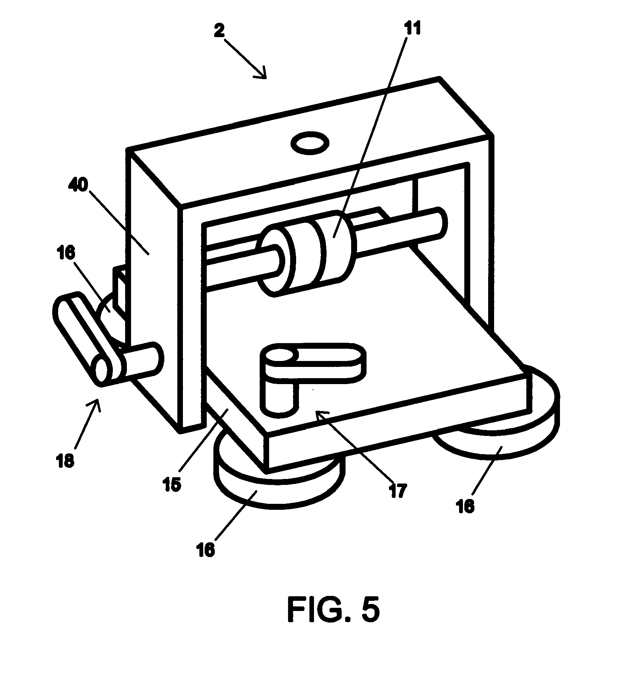

Fig. 4 presents a perspective view of the rail with the camera dolly and the counterbalance, said rail combined with the feet for the camera dolly function; and Fig. 5 presents a perspective view of the camera dolly.

### DETAILED DESCRIPTION OF INVENTION

The figures illustrate a presently preferred embodiment of the camera slider/crane of the present invention. It is a simplified version, which contains only the essential elements required for representing the idea of the invention. The same refference numbers indicate the same parts in all figures, therefore they will be described together. In overview, the camera slider/crane includes a rail 1 for driving a camera dolly 2 along said rail 1, the rail 1 having a center of gravity of the rail and a pivot 20 placed in the center of gravity, said camera dolly 2 coupled with a counterbalance 3 drivable along the rail 1 in the oposite direction to the camera dolly 2 in relation to the center of gravity of the rail; an arm 4 comprising two elongated arm members, a first arm member 12 substantially parallel to the rail 1 and a second arm member 9 substantially vertical, said first arm member 12 having a first end 30 of the first arm member 12 and a second end 31 of the first arm member 12, said first end 30 of the first arm member 12 connected rotatably to the tripod head, said second arm member 9 having a first end 32 of the second arm member 9 and a second end 33 of the second arm member 9, said first end 32 of the second arm member 9 connected fixedly and detachably to the tiltable part 40 of the camera dolly 2, said first arm member 12 and said second arm member 9 connected rotatably together at their second ends 31, 32 respectively, wherein length of said first arm member 12 being adjustable, by any known in the art maner, for the desired movement of the camera connected to the tiltable part of the camera dolly 2, and for remaining of the camera shooting object in the shooting area during rotating the rail 1 around the pivot 20, while the locking system 11 is disabled, said arm 4 changing thereby the camera slider/crane into a crane function; a mounting unit 5 consisting of metal parts connecting together the rail 1 and the tripod head 6, positioning the rail 1 in a vertical position; a tripod head 6; and two feet 7 for leveling the rail 1 while said rail 1 is used in horizontal position, and one of said feet 7 for securing the rail 1 while said rail 1 is used in vertical position. The tripod head 6 is rotatable and is connected detachably to a tripod 8. The rail 1 is connected detachably and pivotably to the tripod head 6 at the pivot or center of gravity 20.

The rail 1 has an upper tracks 13 and a lower tracks 14.

The camera dolly 2 comprises a tiltable part 40 of the camera dolly which is tiltable in the plane of the tiltable movement of the rail, said camera dolly comprises a base 15 with an upper guiding wheels 16 drivable along the upper tracks 13 and lockable by a first locking means 17. The locking means 17 include a tightable handle/lever which has a first or loose position, and a second or locking position, in which position the handle/lever functions as a brake, which lock the camera dolly at the desired position at the upper rails.

The camera dolly 2 is tiltable and furthermore is lockable against the base 15 by a second locking means 18. The second locking means include a tightable handle/lever which has a first or loose position, and a second or locking position, in which position the handle/lever functions as a brake, which can hold the desired position of the camera dolly 2 against the base 15.

The counterbalance 3 comprises a lower guiding wheels 19 drivable along the lower tracks 14 respectively in the opposite direction to the moving direction of the camera dolly 2, symmetrically to the pivot or center of gravity 20 of the rail 1. The counterbalance 3 includes at least one rectangular detachable metal plate for compensating the weight of the camera and the dolly against center of the gravity of the camera slider/crane.

The rail 1 is in a shape of an elongated, hollow body and is lockable against the tripod head 6 at desired by the camera operator angle against the ground level by a third locking means 21. The third locking means 21 include a turnable handle/lever which has a first or loose position, and a second or locking position in which position the handle/lever functions as a brake, which can hold the desired position of the rail 1 against the tripod head 6.

The camera dolly 2 and the counterbalance 3 are connected respectively by a flexible member 22 placed within the elongated hollow body around a profile wheels 23, wherein each of the profile wheels 23 is placed rotatably, respectively at each end section of the elongated hollow body, and the flexible member 22 is in a form of a looped belt adjacent tight to at least part of an external round surface of each of the profile wheels 23 respectively, and said flexible member 22 is smoothly guided by the profile wheels 23 and is movable along the elongated hollow body, wherein the flexible member 22 has two sections movable in the opposite direction along the elongated hollow body, said two sections movable at each time symmetrically to the center point or point of gravity or pivot 20 of the elongated hollow body, and wherein the camera dolly 2 and the counterbalance 3 are each connected to one of said section respectively.

The weight of the counterbalance 3 is adjustable by detachable weight segments 24 lockable to the counterbalance by a forth locking means 25 respectively according the weight of the camera.

The profile wheels 23 and the flexible member 22 are drivable by a crank handle 26. The locking system 11 is comprising two cylinders with teeth on the respective cylinder sides placed against each other, which teeth can be connected when desired and lock the locking system 11 securing the camera when the camera slider/crane works in all functions of the camera slider/crane and the first end 32 of the second arm member 9 is connected to the tiltable part 40 of the camera dolly 2 in the crane function of the camera slider/crane or when the second locking means 18 is unlocked from the base 15.

The preferred embodiment having been thus described, it will now be evident to those skilled in the art that further variation thereto may be contemplated. Such variations are not regarded as a departure from the invention, the true scope of the invention being set forth in the claims appended hereto.

## Claims

1. A camera slider/crane comprising
a rail for driving a camera dolly along said rail, the rail having a center of gravity of the rail and a pivot placed in the center of gravity, said camera dolly coupled with a counterbalance drivable along the rail in the oposite direction to the camera dolly in relation to the center of gravity of the rail;
an arm changing the camera slider/crane into a crane function;
a mounting unit for positioning the rail in a vertical position;
a tripod head; and
two feet for leveling the rail when said rail is used in horizontal position and one of said feet for securing the rail when said rail is used in vertical position, wherein the tripod head is rotatable in the horizontal plane and is connected detachably to a tripod, and the rail is connected detachably and pivotably at the center of gravity of the rail by means of the pivot to the tripod head, and wherein the rail and the arm, in the crane function of the camera slider/crane, are movable during opreation of the camera substantially in the same vertical plane for providing the camera upwards or downwards movement during shooting.

2. The camera slider/crane according to claim 1, wherein the arm comprises two elongated arm members, a first arm member substantially parallel to the rail and a second arm member substantially vertical, said first arm member having a first end of the first arm member and a second end of the first arm member, said first end of the first arm member connected rotatably to the tripod head, said second arm member having a first end of the second arm member and a second end of the second arm member, said first end of the second arm member connected fixedly and detachably to the tiltable part of the camera dolly, said first arm member and said second arm member connected rotatably together at their second ends respectively, wherein length of said first arm member being adjustable, for the desired movement of the camera connected to the tiltable part of the camera dolly, while the locking system is disabled and the rail is rotated around the pivot for mooving the camera up or down.

3. The camera slider/crane according to claim 1, wherein the rail has an upper tracks and a lower tracks.

4. The camera slider/crane according to claim 3, wherein the camera dolly comprises a base with an upper guiding wheels drivable along the upper tracks and lockable by a first locking means.

5. The camera slider/crane according to claim 4, wherein the camera dolly comprises a tiltable part of the camera dolly which is tiltable in the plane of the tiltable movement of the rail, and furthermore is lockable against the base by a second locking means.

6. The camera slider/crane according to claim 3, wherein the counterbalance comprises a lower guiding wheels drivable along the lower tracks respectively in the opposite direction to the moving direction of the camera dolly, symmetrically to the center of the point of gravity of the rail.

7. The camera slider/crane according to claim 1, wherein the rail is lockable against the tripod head at required angle by a third locking means.

8. The camera slider/crane according to claim 1, wherein the rail is in a shape of an elongated, hollow body.

9. The camera slider/crane according to claim 8, wherein the camera dolly and the counterbalance are connected respectively by a flexible member placed within the elongated hollow body around a profile wheels, wherein each of the profile wheels is placed rotatably, respectively at each end section of the elongated hollow body, and the flexible member is in a form of a loop tensioned around the profile wheels and is smoothly movable along the elongated hollow body.

10. The camera slider/crane according to claim 1, wherein the weight of the counterbalance is adjustable by detachable weight segments lockable to the counterbalance by a forth locking means respectively according the weight of the camera.

11. The camera slider/crane according to claim 9, wherein the profile wheels and the flexible member are drivable by a crank handle or a motor (not claimed) controlled by Motion Control System (not claimed).

12. The camera slider/crane according to claim 1, wherein the locking system secure the camera while the camera slider/crane operates in any function of the camera slider/crane, and the first end of the second arm member is connected to the tiltable part of the camera dolly while in the crane function of the camera slider/crane or when the second locking means is unlocked from the base.
